# EUROPÄISCHE PATENTANMELDUNG

(11) **EP 3 159 086 A1**
(43) Veröffentlichungstag der Anmeldung: **26.04.2017**
(21) Anmeldenummer: 16190041.0
(22) Anmeldetag: 22.09.2016
(51) Int. Cl.: B23B 51/02, B23B 51/04, B28D 1/14

(54) **BOHRWERKZEUG**

(30) Priorität: 22.10.2015 DE 102015220634
(71) Anmelder: ROBERT BOSCH GMBH, 70442 Stuttgart (DE)
(72) Erfinder: Pedretti, Andrea, 6900 Lugano (CH)

(57) **Zusammenfassung**

Die Erfindung beschreibt ein Bohrwerkzeug (1) zur bohrenden und/oder schlagenden Bearbeitung von Werkstoffen, insbesondere von Werkstoffen wie Gestein, Beton und/oder armiertem Beton, mit einem einen Arbeitskörper (6) aufweisenden Arbeitsbereich (5) mit zumindest einem axial und/oder radial zum Arbeitskörper (6) abstehenden, insbesondere als Schneidplatte ausgebildeten, Schneidelement (7, 8, 9), wobei das zumindest eine Schneidelement (7, 8, 9) zumindest eine erste Schneidkante (19) und zumindest eine zweite Schneidkante (21) aufweist. Es wird vorgeschlagen, dass die zumindest eine zweite Schneidkante (21) als eine Ersatzschneidkante und/oder als eine Hilfsschneidkante dient und die zumindest eine zweite Schneidkante (21) gegenüber der zumindest einen ersten Schneidkante (19) des Bohrwerkzeugs (1) axial entlang einer Längsachse (a) des Bohrwerkzeugs (1) in Richtung zum Befestigungsbereich (3), insbesondere zumindest teilweise, zurückversetzt ist.

## Beschreibung

Die Erfindung bezieht sich auf ein Bohrwerkzeug zur bohrenden und/oder schlagenden Bearbeitung von Werkstoffen, insbesondere von Werkstoffen wie Gestein, Beton und/oder armiertem Beton, mit einem einen Arbeitskörper aufweisenden Arbeitsbereich mit zumindest einem axial und/oder radial zum Arbeitskörper abstehenden, insbesondere als Schneidplatte ausgebildeten, Schneidelement, wobei das zumindest eine Schneidelement zumindest eine erste Schneidkante und zumindest eine zweite Schneidkante aufweist.

### Stand der Technik

Die EP 1 273 372 A1 offenbart einen Bohrer, insbesondere zum Bohren von Gestein mit einem länglichen Schaft und wenigstens einer Schneidplatte an einem Ende. Die Schneidplatte weist Schneidkanten auf, die durch aneinander grenzende Freiflächen und Spanflächen gebildet werden. Die Spanflächen weisen zwischen Randabschnitten am Umfang des Bohrers und Abschnitten im Zentrum des Bohrers ein oder mehrere bis in die benachbarten Freiflächen hineinlaufende Ausnehmungen auf. Diese Ausnehmungen verkleinern den Keilwinkel zumindest in einem unmittelbaren zumindest die Schneidkanten heranreichenden Längsabschnitt gegenüber den übrigen Schneidkantenabschnitten. Auf diese Weise wird eine verbesserte Bohrleistung bei guter Ausbruchsicherheit der Schneidkanten erreicht.

### Offenbarung der Erfindung

Der Erfindung liegt die Aufgabe zugrunde, mit einfachen Maßnahmen ein Bohrwerkzeug für eine Werkzeugmaschine, insbesondere eine Handwerkzeugmaschine, zu verbessern.

Die Aufgabe wird gelöst mit einem Bohrwerkzeug zur bohrenden und/oder schlagenden Bearbeitung von Werkstoffen, insbesondere von Werkstoffen wie Gestein, Beton und/oder armiertem Beton, mit einem einen Arbeitskörper aufweisenden Arbeitsbereich mit zumindest einem axial und/oder radial zum Arbeitskörper abstehenden, insbesondere als Schneidplatte ausgebildeten, Schneidelement, wobei das zumindest eine Schneidelement zumindest eine erste Schneidkante und zumindest eine zweite Schneidkante aufweist.

Erfindungsgemäß dient die zumindest eine zweite Schneidkante als eine Ersatzschneidkante und/oder als eine Hilfsschneidkante und die zumindest eine zweite Schneidkante ist gegenüber der zumindest einen ersten Schneidkante des Bohrwerkzeugs axial entlang einer Längsachse des Bohrwerkzeugs in Richtung zum Befestigungsbereich, insbesondere zumindest teilweise, zurückversetzt.

Die Erfindung ermöglicht es, ein Bohrwerkzeug mit einer erhöhten Standzeit bereitzustellen, indem nach Verschleiß einer ersten Schneidkante mit einer zweiten Schneidkante gebohrt werden kann. Die erste Schneidkante kann bei abnehmender Bohrleistung bzw. abnehmender Bohrgeschwindigkeit, insbesondere bei verschlissenem Zustand, abgeschliffen werden, um die zweite Schneidkante zum Bohren freizulegen bzw. bereitzustellen. Hierdurch kann insbesondere die Standzeit des Bohrwerkzeugs signifikant erhöht, insbesondere verdoppelt, werden, da bei einer verschlissenen ersten Schneidkante mit einer zweiten als eine Ersatzschneidkante ausgebildete Schneidkante weiterführend gearbeitet werden kann. Insbesondere bei Bohrwerkzeugen mit großen Abmessungen ist es für einen Benutzer sehr vorteilhaft und ressourcensparend eine als Ersatzschneidkante ausgebildete zweite Schneidkante freizulegen, anstatt das verschlissene Bohrwerkzeug durch ein neues Bohrwerkzeug zu ersetzen.

Das erfindungsgemäße Bohrwerkzeug ist ein- oder mehrteilig aufgebaut. Bei einer mehrteiligen Ausführungsform des Bohrwerkzeugs können die Teile mittels einer Schweiß- oder einer Lötverbindung verbunden sein. Grundsätzlich sind auch weitere, dem Fachmann als sinnvoll erscheinende Verbindungen zwischen der mehrteiligen Ausführungsform des Bohrwerkzeugs denkbar.

Vorzugsweise kann das Bohrwerkzeug, insbesondere der Arbeitskörper des Bohrwerkzeugs, einen an den Arbeitsbereich angrenzenden, insbesondere anschließenden, Befestigungsbereich zur Befestigung des Bohrwerkzeugs, insbesondere in einer Haltevorrichtung einer Werkzeugmaschine, aufweisen.

Das Schneidelement kann dabei aus einem dem Arbeitskörper verschiedenen Werkstoff ausgebildet sein. Das Schneidelement kann ein Hartmetall enthalten oder daraus bestehen.

Die zumindest eine Schneidkante ist als Ersatzschneidkante und/oder als Hilfsschneidkante ausgebildet.

Unter dem Begriff "Schneidplatte" soll insbesondere verstanden werden, dass das Schneidelement im Wesentlichen formstabil und flach ausgebildet ist. Eine Schneidplatte ist einem Fachmann bereits bekannt und wird daher nicht näher ausgeführt.

Der Begriff "Schneidkante" soll hier insbesondere eine Kante des Schneidelements definieren, die dazu vorgesehen ist, während einer Bearbeitung eines Werkstücks mittels des Schneidelements Werkstückpartikel des Werkstücks abzutragen, abzuschneiden und/oder abzuschaben. Die Schneidkante kann als zumindest eine Ecke und/oder zumindest eine Zuspitzung ausgebildet sein.

Unter "zurückversetzt" soll in diesem Zusammenhang verstanden werden, dass insbesondere die erste Schneidkante an die zweite Schneidkante anschließt oder gegenüber der zweiten Schneidkante beabstandet ist.

Unter einer "Ersatzschneidkante" soll eine Schneidkante verstanden werden, die dazu vorgesehen ist, insbesondere eine Funktion und/oder eine Wirkung, einer beispielsweise beschädigten und/oder verschlissenen, insbesondere ersten, Schneidkante zumindest teilweise auszugleichen oder zu ersetzen.

Unter einer "Hilfsschneidkante" soll eine Schneidkante verstanden werden, die dazu vorgesehen ist, insbesondere eine schützende, abweisende und/oder eine vorschneidende Funktion und/oder Wirkung, vorzugsweise für eine entgegen der Drehrichtung nachfolgenden Schneidkante auszuführen.

Unter einer "Drehrichtung" soll insbesondere eine Richtung verstanden werden, die zu einer Längsachse des Bohrwerkzeugs beabstandet ist und durch Punkte entlang einer gekrümmten Bahn, insbesondere einer Umlaufbahn oder einer Kreisbahn, beschrieben werden kann und insbesondere eine Bohrdrehrichtung des Bohrwerkzeugs vorgibt. Insbesondere kann die Drehrichtung entsprechend der Ausrichtung der Schneidkanten rechtsdrehend oder linksdrehend sein.

Insbesondere kann die zweite Schneidkante bezogen auf die erste Schneidkante einen Axialversatz entlang der Längsachse des Bohrwerkzeugs aufweisen.

Die Unteransprüche geben zweckmäßige Weiterbildungen des erfindungsgemäßen Bohrwerkzeugs an.

Es kann zweckmäßig sein, dass die zumindest eine erste Schneidkante bei einer Drehung um die Längsachse eine erste Einhüllende und die zumindest eine zweite Schneidkante bei einer Drehung um die Längsachse eine zweite Einhüllende im Betrieb des Bohrwerkzeugs definiert, wobei die zweite Einhüllende gegenüber der ersten Einhüllenden axial entlang der Längsachse des Bohrwerkzeugs in Richtung zum Befestigungsbereich des Bohrwerkzeugs, insbesondere zumindest teilweise, zurückversetzt ist. Weiterhin kann es zweckmäßig sein, dass die erste Einhüllende gegenüber der zweiten Einhüllenden parallel verläuft.

Ferner kann es zweckmäßig sein, dass die zumindest eine zweite Schneidkante parallel zu der zumindest einen ersten Schneidkante angeordnet ist. Insbesondere kann die zweite Schneidkante gegenüber der ersten Schneidkante einen konstanten Abstand aufweisen.

Insbesondere kann bis zu 100 %, vorzugsweise bis zu 90 %, bevorzugt bis zu 80 %, besonders bevorzugt bis zu 70 %, einer maximalen, insbesondere axialen und/oder radialen, Erstreckung der zumindest einen zweiten Schneidkante parallel zu der zumindest einen ersten Schneidkante angeordnet sein.

Dadurch kann erreicht werden, dass sich die zweite Schneidkante beim Betreiben des Bohrwerkzeugs, insbesondere mit der ersten Schneidkante, gegenüber der ersten Schneidkante weniger stark abnützt bzw. vermindert abnützt, bevorzugt nicht abnützt. Somit kann die zweite Schneidkante geschont werden, um nach Verschleiß der ersten Schneidkante zur Bearbeitung eines Werkstücks freigelegt zu werden.

Insbesondere kann die zweite Einhüllende vollständig innerhalb der ersten Einhüllenden liegen und/oder die erste Einhüllende nur an einer Bohrerspitze berühren.

Vorzugsweise kann die zumindest eine erste und/oder zweite Schneidkante von einer Bohrerspitze, insbesondere streng, monoton bis zu einem Umfangsbereich, insbesondere einer Umfangsfläche, des Schneidelements verlaufen.

Bevorzugt kann die zweite Einhüllende die ersten Einhüllende, insbesondere in einem Bereich der Bohrspitze schneiden.

Insbesondere können die erste Einhüllende und die zweite Einhüllende kegelförmig ausgebildet sein. Vorzugsweise kann die erste Einhüllende gegenüber der Längsachse des Bohrwerkzeugs stärker angewinkelt sein als die zweite Einhüllende.

Unter einer "Einhüllenden" soll eine Rotationsfläche verstanden werden, die durch eine Rotation einer Schneidkante, insbesondere der ersten Schneidkante oder der zweiten Schneidkante, um eine Längsachse des Bohrwerkzeugs ausgebildet wird.

Unter "zumindest teilweise zurückversetzt" soll in diesem Zusammenhang verstanden werden, dass insbesondere die erste Einhüllende an die zweite Einhüllende anschließt oder gegenüber der zweiten Einhüllenden beabstandet ist.

Bezüglich der ersten und der zweiten Schneidkante bzw. der ersten und der zweiten Einhüllenden soll unter "zurückversetzt" insbesondere verstanden werden, dass die zweite Schneidkante die erste Schneidkante bzw. die zweite Einhüllende die erste Einhüllende in axialer Richtung vom Arbeitsbereich zum Befestigungsbereich nicht berührt oder zumindest nicht durchdringt, vorzugsweise die zweite Schneidkante bzw. die zweite Einhüllende in axialer Richtung vom Arbeitsbereich zum Befestigungsbereich vollständig hinter der ersten Schneidkante bzw. der ersten Einhüllenden liegt.

Weiterhin kann es zweckmäßig sein, zwischen der zumindest einen ersten Schneidkante und der zumindest einen zweiten Schneidkante ein, insbesondere axialer, Einschnitt vorgesehen ist. Der Einschnitt kann zumindest eine Fläche aufweisen. Der Einschnitt kann dabei zumindest eine ebene Fläche und/oder eine gekrümmte Fläche aufweisen. Insbesondere kann die zumindest eine gekrümmte Fläche konkav ausgebildet sein. Der Einschnitt kann als Einkerbung ausgebildet sein. Der Einschnitt kann zumindest eine Kante aufweisen, die eine axiale Erstreckung des Einschnitts begrenzt. Der Einschnitt kann zumindest teilweise gegenüber der zweiten Schneidkante entgegen der Vorschubrichtung des Bohrwerkzeugs zurückversetzt sein. Insbesondere kann eine Kante des Einschnitts zumindest teilweise gegenüber der zweiten Schneidkante entgegen der Vorschubrichtung des Bohrwerkzeugs zurückversetzt sein.

Der Einschnitt kann vorteilhaft zumindest eine Spanfläche, insbesondere der ersten Schneidkante, und/oder eine Freifläche, insbesondere der zweiten Schneidkante, aufweisen. Hierdurch kann die zweite Schneidkante besonders schnell und einfach freigelegt werden um das verschlissene Bohrwerkzeug schnell wieder verwenden zu können.

Bevorzugt kann der Einschnitt eine Markierung aufweisen, die dem Bediener des Bohrwerkzeugs anzeigt, wann die erste Schneidkante verschlissen ist und/oder bis wohin der Bediener die erste Schneidkante abzuschleifen hat, um die zweite Schneidkante bei einem anschließenden Freisetzvorgang freizusetzen. Die Markierung kann dabei als eine Kante, eine Ausnehmung oder als ein zusätzlicher Einschnitt ausgebildet sein.

Die Markierung kann als eine Sollbruchstelle ausgebildet sein. Dies erlaubt es einem Benutzer des Bohrwerkzeugs die erste Schneidkante an einer dafür vorgesehenen Position zu brechen oder zu schleifen.

Vorzugsweise kann das zumindest eine Schneidelement, insbesondere die zumindest eine erste Schneidkante und die zumindest eine zweite Schneidkante, einstückig ausgebildet sein.

Unter "einstückig" soll insbesondere zumindest stoffschlüssig verbunden verstanden werden, beispielsweise durch einen Schweißprozess, einen Klebeprozess, einen Anspritzprozess, einen Stanzvorgang, einen Laserschneidvorgang und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und besonders vorteilhaft aus einem einzelnen Rohling.

Bevorzugt kann die zumindest eine zweite Schneidkante gegenüber der zumindest einen ersten Schneidkante entgegen einer Drehrichtung des Bohrwerkzeugs, insbesondere zumindest teilweise, zurückversetzt sein. Insbesondere kann die zweite Schneidkante in einem Freiflächenbereich der ersten Schneidkante vorgesehen sein. Dadurch wird verhindert, dass die zweite Schneidkante bei frei vorstehender bzw. nicht verschlissener erster Schneidkante beschädigt bzw. verschlissen wird.

Besonders bevorzugt kann die zumindest eine erste Schneidkante gegenüber der zumindest einen zweiten Schneidkante entgegen einer Drehrichtung des Bohrwerkzeugs, insbesondere zumindest teilweise, zurückversetzt sein. Insbesondere kann die zweite Schneidkante in einem Spanflächenbereich der ersten Schneidkante vorgesehen sein. Dadurch kann vorteilhafterweise die zweite Schneidkante als eine Schutzschneidkante ausgebildet sein, die beispielsweise harte in dem zu bohrenden Werkstoff freigelegte Materialien abweist oder vorschneidet, sodass diese nicht direkt auf beispielsweise die erste Schneidkante treffen und diese schädigen. In dieser Hinsicht wird Bezug genommen auf die Anmeldung DE 10 2012 221812 A1, deren Inhalt hiermit in diese Anmeldung aufgenommen wird.

Die Erfindung ermöglicht ferner eine erhöhte Standzeit bereitzustellen, indem beim Bohren freigelegte harte Materialien, wie beispielsweise Metallarmierungen, nicht direkt auf die erste Schneidkante treffen, sondern mit Hilfe einer zweiten Schneidkante abgeleitet oder zumindest teilweise vorgeschnitten bzw. vorbearbeitet werden. Da die zweite gegenüber der ersten Schneidkante zumindest teilweise zurückversetzte Schneidkante weitgehend von Verschleiß geschützt ist, kann die zweite Schneidkante an vorstehenden Metallarmierungen angreifen, um dieses zumindest teilweise vorzugsweise zu zerschneiden, zu zertrennen, zu zerreißen und/oder anderweitig zu zerteilen und abzutragen.

Es kann ferner zweckmäßig sein, dass zumindest eine zweite Schneidkante gegenüber der zumindest einen ersten Schneidkante in Drehrichtung und zumindest eine weitere zweite Schneidkante entgegen der Drehrichtung des Bohrwerkzeugs, insbesondere zumindest teilweise, versetzt sind.

Insbesondere kann die zumindest eine zweite Schneidkante an einen Umfangsbereich des Bohrwerkzeugs angrenzen. Vorzugsweise kann die zumindest eine zweite Schneidkante in einem radial außenliegenden Bereich des Schneidelements angeordnet sein. Hierdurch kann die zweite Schneidkante nur in dem Bereich des Bohrwerkzeugs vorgesehen sein, der aufgrund erhöhter Reibung einen erhöhten Verschleiß aufweist.

Ferner kann es zweckmäßig sein, dass sich eine maximale Radialerstreckung der zumindest einen zweiten Schneidkante gegenüber einer maximalen Radialerstreckung der zumindest einen ersten Schneidkante um bis zu 90 %, insbesondere bis zu 80 %, vorzugsweise bis zu 70 %, bevorzugt bis zu 60 %, besonders bevorzugt bis zu 50 %, erstreckt.

Weiterhin kann es zweckmäßig sein, dass sich eine maximale Axialerstreckung der zumindest einen zweiten Schneidkante gegenüber einer maximalen Axialerstreckung der zumindest einen ersten Schneidkante um bis zu 90 %, insbesondere um bis zu 80 %, vorzugsweise um bis zu 70 %, bevorzugt um bis zu 60 %, besonders bevorzugt um bis zu 50 %, erstreckt.

Dadurch kann die zweite Schneidkante optimalerweise dort vorgesehen sein, wo der größte Verschleiß auftritt, sodass lediglich der Teil der ersten Schneidkante durch die zweite Schneidkante ersetzt wird, der einen hohen Verschleiß aufweist.

Ferner wird vorgeschlagen, dass zumindest ein Schneidelement als Nebenschneidelement ausgebildet ist. Dies erlaubt es, bei einer verschlissenen ersten Schneidkante des Nebenschneidelements eine zweite Schneidkante freizulegen.

Desweiteren wird vorgeschlagen, zumindest ein Schneidelement als Hauptschneidelement auszubilden. Hiermit ergibt sich die Möglichkeit, bei verschlissener erster Schneidkante des Hauptschneidelements eine zweite Schneidkante freizulegen.

In einer vorteilhaften Ausführungsform kann das Bohrwerkzeug als Spiralbohrwerkzeug oder als Hohlbohrwerkzeug ausgebildet sein.

Zweckmäßigerweise kann der Arbeitskörper des Arbeitsbereichs zumindest eine, insbesondere spiralförmig, um eine Längsachse des Bohrwerkzeugs verlaufende Nut zum Fördern von Bohrmehl aufweisen. Dadurch kann Bohrmehl aus dem Arbeitsbereich bzw. aus dem Bohrloch gefördert werden.

Besonders bevorzugt kann zumindest ein Schneidelement einstückig, insbesondere einteilig, mit dem Arbeitskörper ausgebildet sein. Dadurch kann der Herstellaufwand vorteilhaft minimiert werden.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und sie zu sinnvollen weiteren Kombinationen zusammenfassen.

Hierbei zeigt
- Fig. 1: eine perspektivische Ansicht einer Handwerkzeugmaschine mit einem Bohrwerkzeug,
- Fig. 2: eine Ansicht einer ersten Ausführungsform eines erfindungsgemäßen Bohrwerkzeugs,
- Fig. 3: eine perspektivische Ansicht einer zweiten Ausführungsform eines Bohrwerkzeugs,
- Fig. 4: eine perspektivische Ansicht eines Schneidelements einer dritten Ausführungsform des Bohrwerkzeugs,
- Fig. 5: eine perspektivische Ansicht einer vierten Ausführungsform eines Bohrwerkzeugs und
- Fig. 6: eine perspektivische Ansicht eines Schneidelements der vierten Ausführungsform des Bohrwerkzeugs.

In den folgenden Figuren sind gleiche Bauteile mit gleichen Bezugszeichen versehen.

Die folgenden Figuren beziehen sich jeweils auf ein Bohrwerkzeug zur bohrenden und/oder schlagenden Bearbeitung von, insbesondere mineralischen, Werkstoffen, wie beispielsweise Gestein, Beton und/oder armierten Beton. Das Bohrwerkzeug ist insbesondere zur Befestigung in einer Haltevorrichtung einer Werkzeugmaschine, vorzugsweise einer Handwerkzeugmaschine, mit einer rotatorischen und/oder translatorischen Arbeitsbewegung auf ein zu bearbeitendes Werkstück. Dabei wird ein translatorischer Vorschub in das Werkstück eingebracht, in dem der Bediener der Handwerkzeugmaschine eine Kraft auf die Handwerkzeugmaschine, insbesondere auf ein Handwerkzeugmaschinengehäuse, aufbringt. Das erfindungsgemäße Bohrwerkzeug kann auch zur Bearbeitung von anderen, einem Fachmann als sinnvoll erscheinenden Werkstoffen, wie Holz, Kunststoff oder einem Verbund, vorgesehen sein.

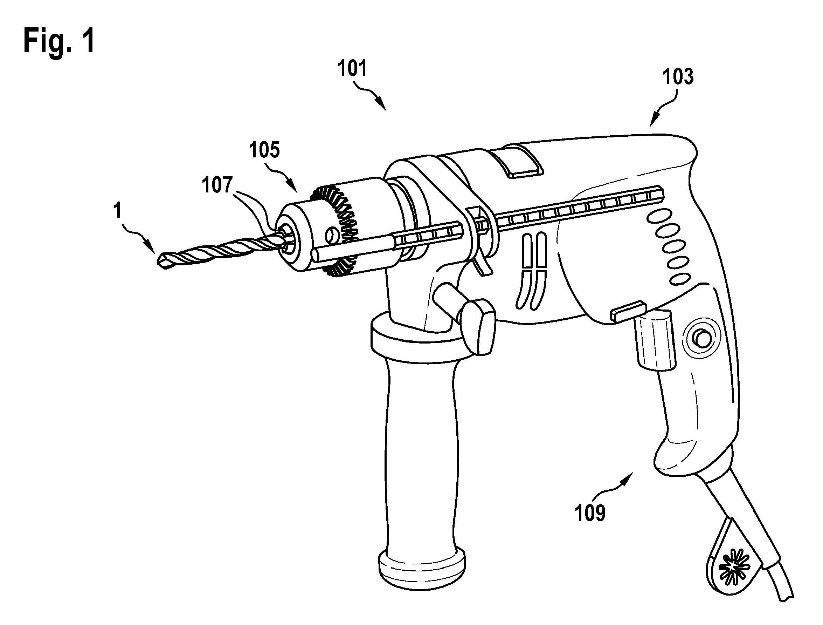

Fig. 1 zeigt eine perspektivische Ansicht einer Handwerkzeugmaschine 101 mit einem in der Haltevorrichtung 105 eingespannten Bohrwerkzeug 1. Die Handwerkzeugmaschine 101 weist ein Handwerkzeugmaschinengehäuse 103 mit zumindest einem Griffbereich 109 zum Umgreifen mit zumindest einer Hand eines Benutzers auf. Die Haltevorrichtung 105 kann beispielsweise drei Klemmbacken 107 aufweisen, von denen nur zwei Klemmbacken 107 gezeigt sind. Die Klemmbacken 107 spannen das Bohrwerkzeug 1 radial und/oder axial in der Haltevorrichtung 105 ein.

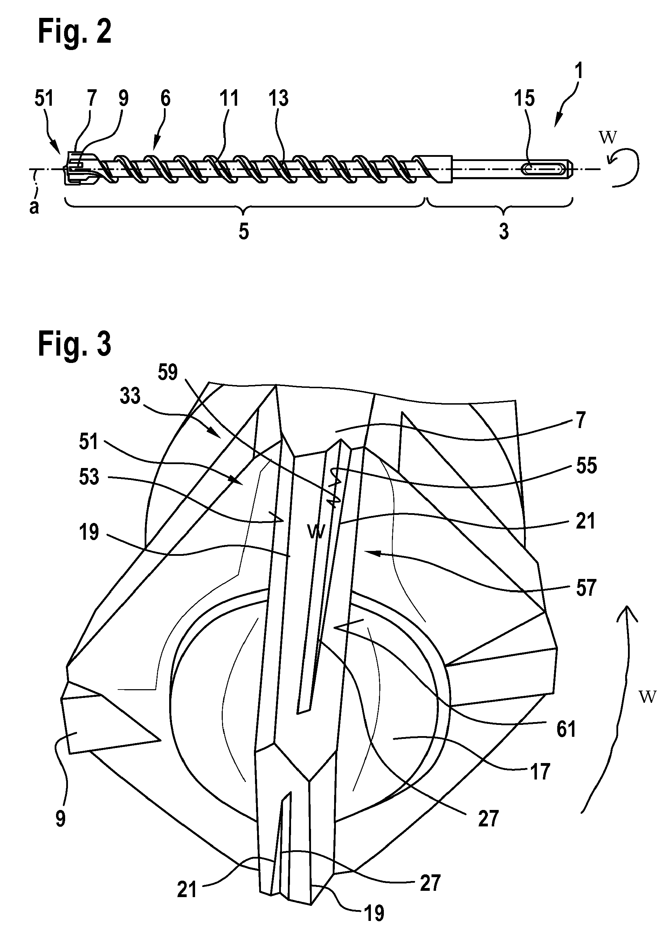

Fig. 2 zeigt eine erste Ausführungsform eines Bohrwerkezugs 1 mit einem Befestigungsbereich 3 zur Befestigung in einer Haltevorrichtung 105 einer Handwerkzeugmaschine 101 und einem Arbeitsbereich 5 zum Bearbeiten eines Werkstücks. Das Bohrwerkzeug 1 ist zumindest im Wesentlichen zylinderförmig ausgebildet. Der Befestigungsbereich 3 weist zumindest abschnittsweise eine kreisförmige Querschnittsfläche auf. Alternativ oder zusätzlich kann die Querschnittsfläche zumindest abschnittsweise einen polygonartigen Querschnitt aufweisen. Der Befestigungsbereich 3 erstreckt sich von einem Einspannende des Bohrwerkzeugs 1 axial bis zum Arbeitsbereich 5 und grenzt an den Arbeitsbereich 5 an. Dabei vergrößert sich die maximale radiale Erstreckung, insbesondere ein maximaler Durchmesser, des Bohrwerkzeugs 1 in einem Übergangsbereich zwischen dem Befestigungsbereich 3 und dem Arbeitsbereich 5.

Der Befestigungsbereich 3 weist als Vertiefungen ausgebildete Formschlussmittel 15 auf, die zu einer verbesserten, insbesondere formschlüssigen, Verbindung mit der Haltevorrichtung 105 der Handwerkzeugmaschine 101 vorgesehen sein können. Alternativ oder zusätzlich können Formschlussmittel 15 als Erhebungen ausgebildet sein. In einer alternativen Ausführungsform kann der Befestigungsbereich 3 des Bohrwerkzeugs 1 auch ohne Formschlussmittel 15 ausgebildet sein. Insbesondere kann der Befestigungsbereich 3 entsprechend einem SDS-Befestigungsbereich ausgeführt sein.

Der sich an den Befestigungsbereich 3 anschließende Arbeitsbereich 5 umfasst ein, insbesondere als eine Schneidplatte, ausgebildetes Hauptschneidelement 7 und zwei, insbesondere als Schneidplatten ausgebildete, Nebenschneidelemente 9, die einander gegenüberliegen. Das Hauptschneidelement 7 und die Nebenschneidelemente 9 sind stirnseitig in dem Arbeitskörper 6 eingebracht. Dabei sind das Hauptschneidelement 7 und die Nebenschneidelemente 9 mit einem Arbeitskörper 6 des Bohrwerkzeugs 1, insbesondere stoffschlüssig, verbunden, vorzugsweise verschweißt. Die Nebenschneidelemente 9 sind gegenüber dem Hauptschneidelement 7 radial beabstandet.

Das Hauptschneidelement 7 ist vorzugsweise aus Hartmetall ausgebildet.

Der Arbeitsbereich 5 umfasst ferner zwei spiralförmig um eine Längsachse a des Bohrwerkzeugs 1 verlaufende Nuten 13, die im Arbeitskörper 6 des Bohrwerkzeugs 1 ausgebildet sind. Die beiden Nuten 13 verlaufen parallel zueinander. Die beiden Nuten 13 erstrecken sich axial benachbart von einem Befestigungsbereich 3 des Bohrwerkzeugs 1 und münden benachbart zu einem Stirnbereich 51 des Arbeitsbereichs 5. Eine, insbesondere minimale, radiale Erstreckung der beiden Nuten 13 ist entlang einer axialen Erstreckung der beiden Nuten 13 konstant ausgeführt. Alternativ kann sich eine, insbesondere minimale, radiale Erstreckung der beiden Nuten 13 in Richtung des Stirnbereichs 51 zumindest teilweise kontinuierlich und/oder zumindest teilweise sprungartig verringern. Die beiden Nuten 13 werden in Umfangsrichtung von Stegen 11 getrennt. Die Stege 11 verlaufen somit ebenfalls parallel zu den Nuten 13 und sind dementsprechend spiralförmig ausgebildet.

In Fig. 3 ist eine Ansicht einer zweiten Ausführungsform des Bohrwerkzeugs 1 gezeigt. Dabei ist in dieser Ausführungsform das als Schneidplatte ausgebildete Hauptschneidelement 7 in dem Arbeitskörper 6 eingebracht und die Nebenschneidelemente 9 einstückig bzw. einteilig aus dem Arbeitskörper 6 ausgebildet. Eine Querschnittsfläche des Stirnbereichs 51 ist hierbei zumindest im Wesentlichen polygonartig, insbesondere im Wesentlichen viereckig, ausgebildet. Der Arbeitsbereich 5 weist stirnseitig eine, insbesondere als eine Erhebung ausgebildete, Erhöhung 17 auf, die sich axial und radial zu der Längsachse a erstreckt. Die Erhöhung 17 erstreckt sich zumindest im Wesentlichen kreisförmig um die Längsachse a, insbesondere in einem radial innenliegenden Bereich einer Stirnseite, des Bohrwerkzeugs 1.

Die beiden Nebenschneidelemente 9 erstrecken sich in axialer Richtung aus dem Stirnbereich 51 heraus und stehen gegenüber dem Stirnbereich 51 ab. Die Nebenschneidelemente 9 weisen jeweils eine Schneidkante 19, 21 zur schneidenden Bearbeitung des Werkstücks auf.

Das Hauptschneidelement 7 weist zwei erste Schneidkanten 21 und jeweils eine den beiden ersten Schneidkanten 19 axial entlang einer Längsachse a in Richtung zum Befestigungsbereich zurückversetzte zweite Schneidkanten 21 auf. Die zweite Schneidkante 21 ist gegenüber der ersten Schneidkante 19 parallel angeordnet.

Die ersten Schneidkanten 19 sind zur Längsachse a des Bohrwerkzeugs 1 symmetrisch ausgebildet und erstrecken sich ausgehend von einer Bohrerspitze 31 bis zu einem Umfangsbereich 33, insbesondere einer Umfangsfläche, des Hauptschneidelements 7. Die zweiten Schneidkanten 21 sind ebenfalls symmetrisch zur Längsachse a des Bohrwerkzeugs 1 ausgebildet. Die zweite Schneidkante 21 ist jeweils gegenüber der ersten Schneidkante 19 entgegen der Drehrichtung w des Bohrwerkzeugs 1 zurückversetzt. Die zweiten Schneidkanten 21 sind jeweils in einem Freiflächenbereich der ersten Schneidkanten 19 vorgesehen. In einer alternativen Ausführungsform ist die zweite Schneidkante 21 jeweils gegenüber der ersten Schneidkante 19 in Drehrichtung w des Bohrwerkzeugs 1 zurückversetzt. In einer alternativen Ausführungsform können die zweiten Schneidkanten 21 jeweils in einem Spanflächenbereich der ersten Schneidkanten 19 vorgesehen.

Eine Projektion der zweiten Schneidkante 21 auf einer orthogonal zur Längsachse a des Bohrwerkzeugs 1 aufgespannten Ebene ist parallel zu der ersten Schneidkante 19 angeordnet. In einer alternativen Ausführungsform kann eine Projektion der zweiten Schneidkante 21 gegenüber der ersten Schneidkante 19 auf einer orthogonal zur Längsachse a des Bohrwerkzeugs 1 aufgespannten Ebene angewinkelt verlaufen.

Die zumindest eine zweite Schneidkante 21 erstreckt sich in radialer Richtung gegenüber der zumindest einen ersten Schneidkante 19 um bis zu 95%. Hierbei erstreckt sich eine maximale axiale Erstreckung der zumindest einen zweiten Schneidkante 21 gegenüber einer maximalen axialen Erstreckung der zumindest einen ersten Schneidkante 19 um bis zu 95%.

Zwischen der ersten Schneidkante 19 und der zweiten Schneidkante 21 ist jeweils ein Einschnitt 27 im Hauptschneidelement 7 vorgesehen.

Der Einschnitt 27 ist in axialer Richtung, insbesondere keilförmig, in das Hauptschneidelement 7 eingebracht. Der Einschnitt 27 ist in dieser Ausführungsform durch die zweite Schneidkante 21 begrenzt. Der Einschnitt 27 weist zumindest zwei Flächen 55, 59 auf, die quer zueinander angeordnet sind. Die beiden Flächen 55, 59 bilden eine Kante 27 aus, die gegenüber der ersten Schneidkante 19 und der zweiten Schneidkante 21 entgegen der Vorschubrichtung zumindest teilweise zurückversetzt ist. Insbesondere schließt die Kante 27 an die zweite Schneidkante 21 in einem radial innenliegenden Bereich des Stirnbereichs 51 an bzw. läuft mit der zweiten Schneidkante 21 zusammen. Die beiden Flächen 55, 59 sind jeweils beabstandet zu der ersten Schneidkante 19 angeordnet. Der Einschnitt 27 erstreckt sich vorzugsweise in einem radial ausliegenden Bereich des Hauptschneidelements 7.

Die erste Schneidkante 19 erstreckt sich ausgehend von einer Längsachse a des Bohrwerkzeugs 1 in radialer und axialer Richtung und begrenzt eine radiale Erstreckung des Hauptschneidelements 7 des Bohrwerkzeugs 1. Die erste Schneidkante 19 wird durch eine Spanfläche 53 und eine an die erste Spanfläche 53 anschließende Freifläche 61 ausgebildet. Die Freifläche 61 und insbesondere der Einschnitt 27 trennen dabei die erste Schneidkante 19 von der zweiten Schneidkante 21.

Die zweite Schneidkante 21 wird durch eine entgegen der Drehrichtung w durch die Freifläche 61 und die an die Freifläche 61 anschließende, als Spanfläche gebildete Fläche 55 ausgebildet.

Die Spanfläche 53 ist als Spanfläche der ersten Schneidkante 19 ausgeführt. Die Die Freifläche 61 ist als Freifläche der ersten Schneidkante 19 ausgeführt. Die Fläche 59 ist als eine an die Freifläche 61 angrenzende zweite Freifläche der ersten Schneidkante 19 ausgeführt. Die Fläche 55 ist als Spanfläche der zweiten Schneidkante 21 ausgebildet.

Die Freifläche 61 umgibt den Einschnitt 27 in dieser Ausführungsform, sodass die Freifläche 61 auch eine Freifläche der zweiten Schneidkante 21 bildet.

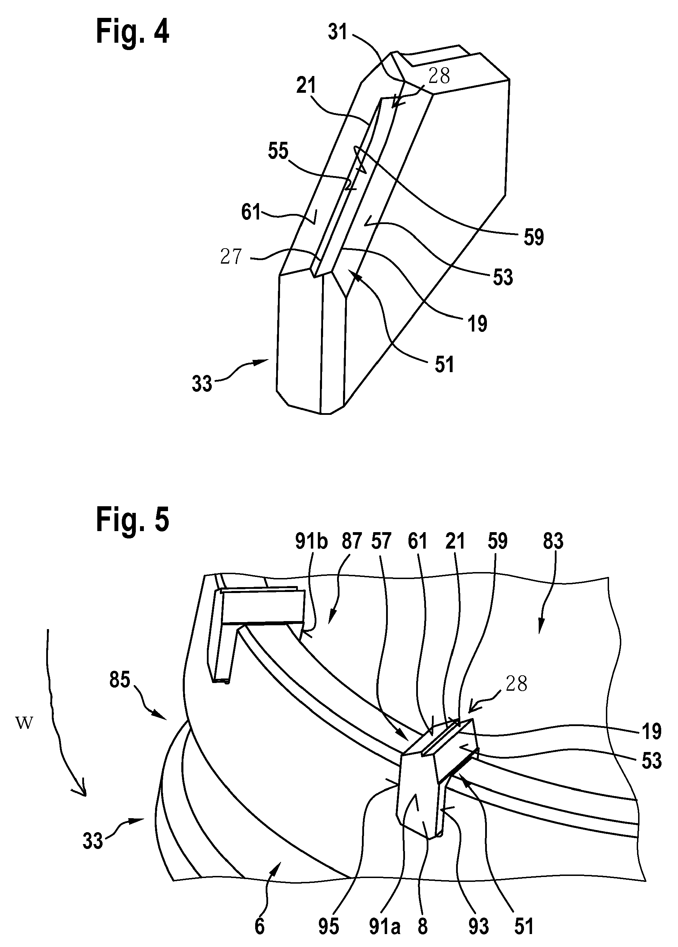

In Fig. 4 eine weitere Ausführungsform des Hauptschneidelements 7 gezeigt. Im Unterschied zu der Ausführungsform gemäß Fig. 3 ist der Einschnitt 27 durch die erste Schneidkante 19 und die zweite Schneidkante 21 begrenzt. Insbesondere ist die erste Schneidkante 19 durch die Spanfläche 53 und die an die Spanfläche 53 anschließende Fläche 59 und insbesondere zumindest teilweise die Freifläche 61 ausgebildet. Die Fläche 59 und die Freifläche 61 sind dabei als Freiflächen der ersten Schneidkante 19 ausgebildet.

Die zweite Schneidkante 21 wird durch eine entgegen der Drehrichtung w an die Fläche 59 anschließende Fläche 55 und die Freifläche 61 ausgebildet. Die Fläche 59 und die Fläche 55 bilden dabei den Einschnitt 27 aus.

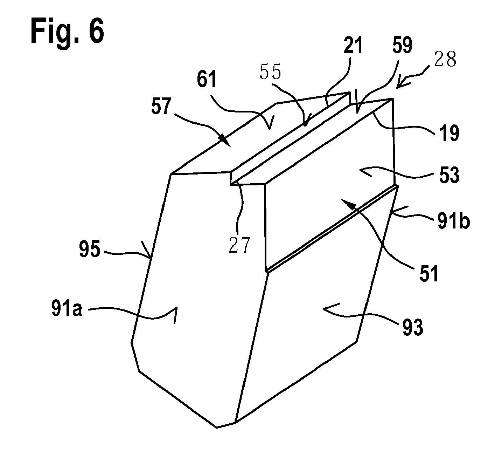

In Fig. 5 und in Fig. 6 ist eine vierte Ausführungsform des erfindungsgemäßen Bohrwerkzeugs 1 gezeigt, wobei ein Schneidelement 8 zumindest im Wesentlichen analog zu den Schneidelementen 7, 9 der ersten Ausführungsform ausgebildet ist. Das Bohrwerkzeug 1 ist dabei als Hohlbohrwerkzeug 1 ausgeführt. Der Arbeitskörper 6 ist hierbei zumindest im Wesentlichen hohlzylindrisch ausgebildet. Der Arbeitskörper 6 weist einen zylindrischen Innenbereich 83, insbesondere eine zylindrisch ausgebildete Innenfläche, und einen gegenüber dem Innenbereich 83 angeordneten, außenliegenden Außenbereich 85 auf. Der Außenbereich 85 weist ferner zumindest eine Nut 13 und zumindest einen die Nut 13 begrenzenden Steg 11 auf. Die Nut 13 und der Steg 11 verlaufen zumindest im Wesentlichen parallel zueinander. Die Nut ist spiralförmig ausgebildet und verläuft um das Hohlbohrwerkzeug 1 bzw. den Außenbereich 85 des Hohlbohrwerkzeugs 1 um eine Längsachse a herum.

Die Schneidelemente 8 sind hierbei stirnseitig in einer Aussparung in einem Stirnbereich 87 des Hohlbohrwerkzeugs 1 eingebracht, sodass eine Vorderfläche 93 und eine Rückfläche 87 des Schneidelements 8 formschlüssig und/oder stoffschlüssig mit dem Arbeitskörper 6 des Bohrwerkzeugs 1 verbunden sind. Die Schneidelemente 8 erstrecken sich quer insbesondere orthogonal zu dem Innenbereich 83, insbesondere den Innenflächen, bzw. dem Außenbereich 85, insbesondere den Außenflächen, des Arbeitskörpers 6. Die Schneidelemente 8 weisen beidseits Seitenflächen 91 auf, die die Schneidelemente 8 in radialer Richtung begrenzen. Die zu dem Außenbereich 85 zugewandte Seitenfläche 91b steht gegenüber der Außenfläche 85 hervor. Die zu dem Innenbereich 83 zugewandte Seitenfläche 91a des Schneidelements 8 steht ebenfalls gegenüber der Innenfläche 87 hervor. In einer alternativen Ausführungsform können auch nur eine oder keine Seitenflächen 91 gegenüber dem Innenbereich 83 bzw. den Innenflächen und/oder dem Außenbereich 85 bzw. den Außenflächen hervorstehen.

Die Schneidelemente 8 sind im Wesentlichen analog zu dem Hauptschneidelement 7 ausgeführt und weisen ebenfalls wie beispielsweise in der zweiten und/oder dritten Ausführungsform beschrieben, eine erste Schneidkante 19 und eine zu der ersten Schneidkante 19 entgegen der Vorschubrichtung und/oder entgegen der Drehrichtung zurückversetzte zweite Schneidkante 21 auf. Zwischen der ersten Schneidkante 19 und der zweiten Schneidkante 21 ist ebenfalls ein Einschnitt 27 vorgesehen. Die erste Schneidkante 19 und die zweite Schneidkante 21 sind parallel zueinander angeordnet.

Die erste Schneidkante 19 bildet eine erste Einhüllenden und die zweite Schneidkante 21 eine zweite Einhüllenden, sodass die zweite Einhüllende gegenüber der ersten Einhüllenden axial entgegen der Vorschubrichtung des Hohlbohrwerkzeugs 1 zurückversetzt ist. Vorzugsweise liegen mehrere erste Schneidkanten 19 der Schneidelemente 8 auf der ersten Einhüllenden. Insbesondere liegen mehrere zweite Schneidkanten 21 der Schneidelemente 8 auf einer zweiten Einhüllenden. Die erste Einhüllende ist parallel zu der zweiten Einhüllenden angeordnet.

## Patentansprüche

1. Bohrwerkzeug zur bohrenden und/oder schlagenden Bearbeitung von Werkstoffen, insbesondere von Werkstoffen wie Gestein, Beton und/oder armiertem Beton, mit einem einen Arbeitskörper (6) aufweisenden Arbeitsbereich (5) mit zumindest einem axial und/oder radial zum Arbeitskörper (6) abstehenden, insbesondere als Schneidplatte ausgebildeten, Schneidelement (7, 8, 9), wobei das zumindest eine Schneidelement (7, 8, 9) zumindest eine erste Schneidkante (19) und zumindest eine zweite Schneidkante (21) aufweist, **dadurch gekennzeichnet, dass** die zumindest eine zweite Schneidkante (21) als eine Ersatzschneidkante und/oder als eine Hilfsschneidkante dient und die zumindest eine zweite Schneidkante (21) gegenüber der zumindest einen ersten Schneidkante (19) des Bohrwerkzeugs (1) axial entlang einer Längsachse (a) des Bohrwerkzeugs in Richtung zum Befestigungsbereich (3), insbesondere zumindest teilweise, zurückversetzt ist.

2. Bohrwerkzeug nach Anspruch 1, **dadurch gekennzeichnet, dass** die zumindest eine erste Schneidkante (19) bei einer Drehung um die Längsachse (a) eine erste Einhüllende und die zumindest eine zweite Schneidkante (21) bei einer Drehung um die Längsachse (a) eine zweite Einhüllende im Betrieb des Bohrwerkzeugs (1) definiert, wobei die zweite Einhüllende gegenüber der ersten Einhüllenden axial entlang der Längsachse (a) des Bohrwerkzeugs (1) in Richtung zum Befestigungsbereich (3) des Bohrwerkzeugs (1), insbesondere zumindest teilweise, zurückversetzt ist.

3. Bohrwerkzeug nach einem der vorhergehenden Ansprüche, **dadurch gekennzeichnet, dass** die zumindest eine zweite Schneidkante (21), insbesondere bis zu 100 %, vorzugsweise bis zu 90 %, bevorzugt bis zu 80 %, besonders bevorzugt bis zu 70 %, einer maximalen, insbesondere axialen und/oder radialen, Erstreckung der zumindest einen zweiten Schneidkante (21), parallel zu der zumindest einen ersten Schneidkante (19) angeordnet ist.

4. Bohrwerkzeug nach einem der vorhergehenden Ansprüche, **dadurch gekennzeichnet, dass** zwischen der zumindest einen ersten Schneidkante (19) und der zumindest einen zweiten Schneidkante (21) ein, insbesondere axialer, Einschnitt (27) vorgesehen ist.

5. Bohrwerkzeug nach einem der vorhergehenden Ansprüche, **dadurch gekennzeichnet, dass** die zumindest eine zweite Schneidkante (21) gegenüber der zumindest einen ersten Schneidkante (19) entgegen einer Drehrichtung (w) des Bohrwerkzeugs (1), insbesondere zumindest teilweise, zurückversetzt ist.

6. Bohrwerkzeug nach einem der Ansprüche 1 bis 4, **dadurch gekennzeichnet, dass** die zumindest eine erste Schneidkante (19) gegenüber der zumindest einen zweiten Schneidkante (21) entgegen einer Drehrichtung (w) des Bohrwerkzeugs (1), insbesondere zumindest teilweise, zurückversetzt ist.

7. Bohrwerkzeug nach einem der vorhergehenden Ansprüche, **dadurch gekennzeichnet, dass** die zumindest eine zweite Schneidkante (21) an einen Umfangsbereich (33) des Bohrwerkzeugs angrenzt.

8. Bohrwerkzeug nach einem der vorhergehenden Ansprüche, **dadurch gekennzeichnet, dass** sich eine maximale Radialerstreckung der zumindest einen zweiten Schneidkante (21) gegenüber einer maximalen Radialerstreckung der zumindest einen ersten Schneidkante (19) um bis zu 90 %, insbesondere bis zu 80 %, vorzugsweise bis zu 70 %, bevorzugt bis zu 60 %, besonders bevorzugt bis zu 50 %, erstreckt.

9. Bohrwerkzeug nach einem der vorhergehenden Ansprüche, **dadurch gekennzeichnet, dass** sich eine maximale Axialerstreckung der zumindest einen zweiten Schneidkante (21) gegenüber einer maximalen Axialerstreckung der zumindest einen ersten Schneidkante (19) um bis zu 90 %, insbesondere um bis zu 80 %, vorzugsweise um bis zu 70 %, bevorzugt um bis zu 60 %, besonders bevorzugt um bis zu 50 %, erstreckt.

10. Bohrwerkzeug nach einem der vorhergehenden Ansprüche, **dadurch gekennzeichnet, dass** zumindest ein Schneidelements (7, 8, 9) als Nebenschneidelement (9) ausgebildet ist.
